(19) Europäisches Patentamt
European Patent Office
Office européen des brevets

(11) Publication number : **0 625 750 A2**

# (12) EUROPEAN PATENT APPLICATION

(21) Application number : **94303373.8**

(51) Int. Cl.[5] : **G06F 9/46**

(22) Date of filing : **11.05.94**

(30) Priority : **21.05.93 US 66696**

(43) Date of publication of application : **23.11.94 Bulletin 94/47**

(84) Designated Contracting States : **DE FR GB**

(71) Applicant : **AT & T Corp.**
**32 Avenue of the Americas**
**New York, NY 10013-2412 (US)**

(72) Inventor : **Rao, Chung-Hwa Herman**
**4304 Springbrook Drive**
**Edison, New Jersey 08820 (US)**

(74) Representative : **Watts, Christopher Malcolm Kelway, Dr. et al**
**AT&T (UK) Ltd.**
**5, Mornington Road**
**Woodford Green Essex, IG8 0TU (GB)**

## (54) Methods and apparatus for making and using distributed applications.

(57) A client-server system for which applications programmers may easily write services and in which a relationship between a server and a service may be changed without halting the server. Both client and server have access to copies of code for the service. The code has two parts : a caller portion which requests a service and a callee portion which executes the service. State variables in the client process and the server process determine which portion of the code is executed. This mechanism permits a server to forward execution of the service to another server. The code for the service is written using a template which relieves the applications programmer of the need to write specialized code. The server provides the client with a server namespace which is distinct from the server's system namespace. The client can locate a service by means of a service pathname in the system namespace. The server further provides the client with namespace manipulation services which permit the client to add services to and remove services from a server and otherwise to manipulate the server namespace without halting the server.

FIG. 1

109
A
116(1)
B
116(2)
C
116(3)
SERVER NAMESPACE
133
101(a)
101(c)
103(c)
CLIENT
107
105
SERVER
131(a)
SERVICE
117(2)
118(d)
SERVER LIST
103(a)
SERVICE
117(1)
SERVICE
117(3)
131(a)
118(a)
SERVER LIST
105
105
101(d)
SERVER
131(b)
103(b)
SERVER
131(c)
103(c)
SERVICE
117(2)
118(b)
SERVER LIST
SERVICE
117(3)
118(c)
SERVER LIST
102
101(b)

EP 0 625 750 A2

Jouve, 18, rue Saint-Denis, 75001 PARIS

## 1 Background of the Invention

### 1.1 Field of the Invention

The invention concerns data processing systems generally and more particularly concerns techniques for making applications programs to be executed in distributed computing systems and executing such programs.

### 1.2 Description of the Prior Art

Modern computer systems are often distributed, that is, the system is made up of a number of computers which are connected by a network. Each computer is capable of operating independently, but many tasks require the cooperation of several computers. For example, in many such systems, a first process running on one of the computers executes a program which controls a large disk drive; when a second process on another of the computers executes a program which needs a copy of a file on the disk drive, the second process requests that the first process send it the copy via the network.

One way in which processes running in a distributed system may cooperate is as clients and servers. Server processes perform services for client processes. To have a service performed, the client process sends a message requesting the service to the server process; the server process then performs the service and returns a message with the result to the client process. Thus, in the above example, the second process is a file server process, the first process is a client of the file server process, and the service is providing a copy of a file.

A simple model for communications between clients and servers is the remote procedure call. In this model, the client calls a service in the server in the same way in which it would call a procedure which it executes itself, that is, the client ceases executing the procedure from which it made the call, executes the called procedure, and continues execution of the calling procedure on return from the call. In the same way, the process which makes the remote procedure call ceases executing the procedure which made the call. However, since the service is remote, the call turns into a message to the server. The server then executes the service specified in the message and returns a message with the result to the client. When the client receives the message with the result, it resumes execution of the procedure which made the call.

While the client-server model for cooperating processes and the remote procedure call are both widely accepted in the computer arts, it remains difficult for the ordinary applications programmer to write programs using the model. There are several sources for the difficulty. First, there are the complexities of communication. For example, the messages sent through the communications system often have representations of the data which are different from those used in the client and the server; consequently, data must be encoded and decoded each time a message is sent.

Second, there are the complexities of identifying the service remotely. The client and the server are different processes, and they may be running on different computer systems. When this is the case, each process may have a different environment for names representing entities such as files. Such environments are termed herein *namespaces.* When the client and the server have different namespaces, the client must know the name for the service in the server's namespace.

Third, there are the complexities of binding, that is, relating the name of a service to the code for the service. The binding may be done statically, that is, it cannot be changed once the object code for the server has been produced, or it may be done dynamically. In the second case, the binding may be done when the server begins execution or during execution. Binding during execution is the most complex kind of binding, but also the most useful, since it permits addition of services to and removal of services from a running server. It thereby becomes possible to maintain services in a server without shutting the server down.

Fourth, there are the complexities of service location. In order to achieve a higher degree of fault tolerance or to balance system load, it is often useful to be able to have different servers execute the service for the client at different times. However, this needs to be a done in a way which requires no change in the way the client calls the service.

These complexities of communications, naming, binding, and location have at least two unfortunate consequences: first, they leave the applications programmer with the the choices of making do with a set of predefined services which are provided by the operating system or undertaking the enormous effort required to write a client-server system from scratch. Second, even if the applications programmer does undertake the required effort, the result is usable only on the systems for which it is written. What is required, and what the techniques disclosed herein provide, is a way of implementing services which is no more difficult than implementing an ordinary function and which produces reusable implementations.

## 2 Summary of the Invention

The invention provides users of computer systems with techniques for implementing client-server systems which offer the following advantages:

- it is as easy to implement a service as it is to implement a function in a standard programming language;
- it is as easy for a client to specify a service in a server as it is for the client to specify a program in the client's own namespace;
- the client may add services to and delete them from the server and otherwise manipulate the server's namespace;
- services may be added to or removed from a server without interrupting operation of the server; and
- a server may either provide a service itself or forward the service to another server.

Other objects and advantages of the apparatus and methods disclosed herein will be apparent to those of ordinary skill in the art upon perusal of the following Drawing and Detailed Description, wherein:

## 3 Brief Description of the Drawing

FIG. 1 is a diagram of a system of clients and servers which employs the techniques disclosed herein;
FIG. 2 shows code for a service;
FIG. 3 shows how code for a service is produced;
FIG. 4 shows how a service is called;
FIG. 5 shows how a service is forwarded;
FIG. 6 shows predefined services provided by a server;
FIG. 7 shows a super server;
FIG. 8 shows the data structure used to define a server's namespace;
FIG. 9 shows how a server can be used to achieve fault tolerance;
FIG. 10 shows details of a client;
FIG. 11 is a first detailed diagram of a server; and
FIG. 12 is a second detailed diagram of a server.

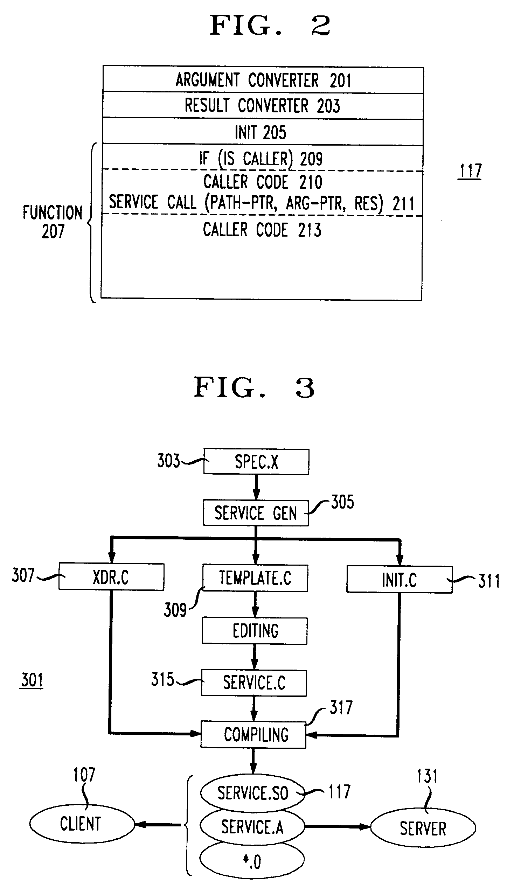

Reference numbers in the Drawing have two parts: the two least-significant digits are the number of an item in a figure; the remaining digits are the number of the figure in which the item first appears. Thus, an item with the reference number 201 first appears in FIG. 2.

## 4 Detailed Description of a Preferred Embodiment

The following *Detailed Description* begins with an overview of a system in which a presently-preferred embodiment of the invention is employed, continues with an overview of the client and server, then provides details of how services are implemented, of how a server namespace is implemented, and of how server namespace operations are implemented, and finally describes a number of applications of the preferred embodiment.

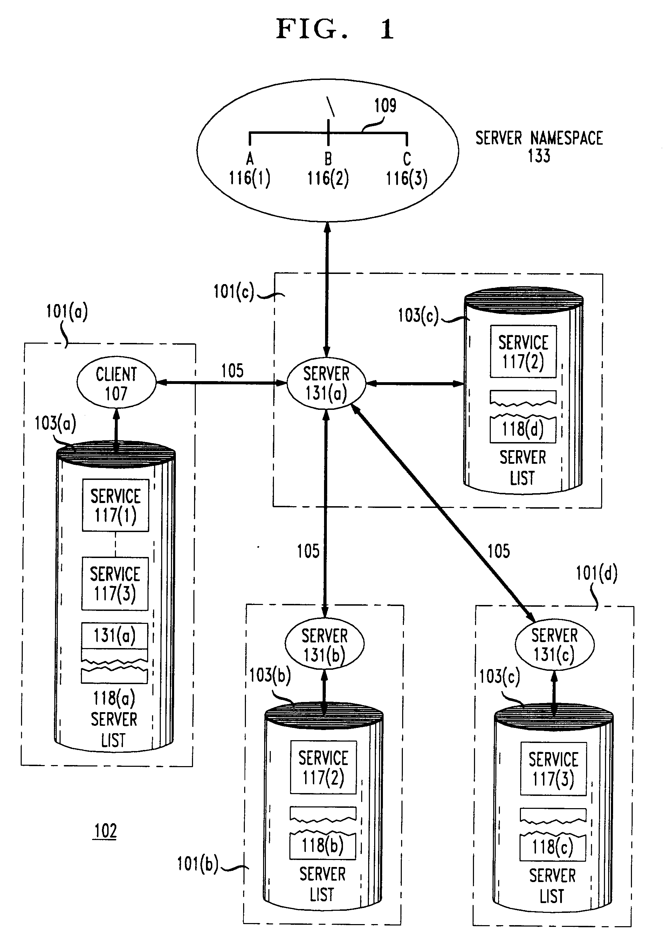

### 4.1 System Overview: FIG. 1

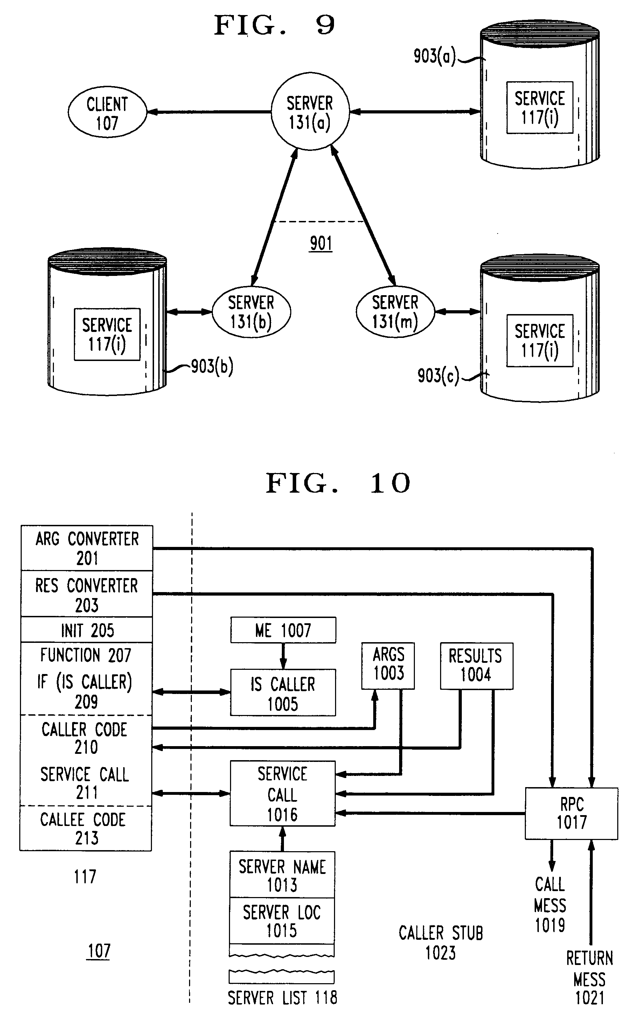

FIG. 1 provides an overview of a preferred embodiment. Distributed system 102 is made up of a number of computer systems 101(a,b,c,and d) are connected by communications system 105. Each computer system 101 has a processor upon which one or more processes may be executed and a file system 103 in which files containing programs and data may be stored for use by the processes. When a process running on a system 101 wishes to access a file in file system 103, it uses a name for the file in 101's system name space. There are four processes shown in FIG. 10, a client process 107 and server processes 131 (a,b, and c) (henceforth, simply client 107 and server 131). In FIG. 10, the clients and servers are on separate systems 101, but a given system 101 may include both clients 107 and servers 131, a server may have many clients, and the server and its clients may be on the same or different systems. Further, one server process 131 may be a client process 107 for another server process 131.

Server 131(a) provides three services 116 named A, B, and C to client 107; the services appear in FIG. 1 as service A 116(1), service B 116(2), and service C 116(3). There is service code 117 corresponding to each service 116. Code 117(1) for service A 116(1) is located on file system 103(c); code 117(2) for service B 116(2) is located on file system 103(b); code 117(3) for service 116(3) is located on file system 103(d). Furthermore, file system 103(a) has a copy of the code for each of services 117(1..3). As will be explained in more detail later, service code 117 includes code to be executed by a caller (client 107 or a server 131 operating as client 107's agent) and a callee (the server 131 which actually performs the service). Client 107 is able to locate server 131(a) by means of server list 118(a) in file system 103(a). Server list 118(a) has an entry for each server 131 which is accessible to client 107. The entry includes the name of the server 131 and the name of a system where server 131 is located. The system name is part of the system name space of computer system 101 upon which client 107 is running. Since the system name is part of the system name space of computer system 101, computer system 101 can use the information in the entry to establish communications between client 107 and the server 131. As will be explained in more detail below, servers 131 are also accessible from other servers 131, and the file system for a given server 131 contains a server list 118 which lists the servers 131 accessible from that server 131.

Server 131(a) provides a server namespace 133 to client 107 and to other servers 131. Server namespace 133 contains a name for every service 116 which server 131(a) provides to client 107 or to another server 131. Server 131(a) can either provide the service 116 itself or *forward* the client 107's request for the service 116 to another server 131, which then provides the service 116. If server 131(a) provides the service itself, server namespace 133 establishes a correspondence between the name of the service and a copy of code 117 for the service which is in system 101(c). If another server, say 131(b), provides the service 116, server namespace 133 for server 131(a) additionally establishes a correspondence between the name of the service 116 and its name in the namespace 133 for server 131(b). In FIG. 1, service 116(1) has the name A, service 116(2) has the name B, and service 116(3) has the name C. In a preferred embodiment, server 131(a) organizes the names in server namespace 133 into a hierarchy 109 of names, with "/" representing the root of hierarchy 109. Client 107 can specify a service 116 provided by server 131(a) by means of a service pathname which has the following form:

<computer_system_name>/<server_name>/<service_name>

Thus, if server list 118(a) indicates that server 131(a) has the name dcs and is on the system called condor, client 107 can specify service A by means of the service pathname /condor/dcs/A. Similarly, the other servers 131 provide server namespaces 133 (not shown in FIG. 10) to the clients and servers to which they make services available.

In a preferred embodiment, client 107 executes a service 116 by executing the callee portion of service code 117 for the service 116. That portion of service code 117 117 contains a ServiceCall <path_ptr>, <arg_ptr>, <result> function which calls service 116 in server 131(a). The arguments for the function are a pointer to a character string which is the service pathname of the service, a pointer to a list of arguments, and a buffer for the result of the service call. If client 107 uses ServiceCall to indicate to server 131(a) that it wishes to be provided with service 116 B, then the pathname pointed to by the first variable is /condor/dcs/B.

Execution of ServiceCall by client 107 results in a message being sent to system 101(c) which specifies server 131(a) as its destination and contains the name of service 116 B and the arguments. When server 131(a) receives the message, it uses the service pathname to look up the service in server namespace 133. If the service is to be executed by server 131(a), server namespace 133 contains the information server 131(a) needs to execute the service; if it is to be executed by another server 131, server namespace 133 contains a *link pathname,* that is, the service pathname for the service in the server namespace 133 belonging to the other server 131.

When server 131(a) is to provide the service, server 131(a) simply executes the portion of code 117 which is to be executed by the callee and returns a message with the results to client 107, which then completes execution of the part of code 117 which is to be executed in client 107. If another server 131 is to provide the service, server 131(a) executes the portion of code 117 which is to be executed by the caller, but uses the link pathname provided by server namespace 133 in ServiceCall along with the arguments which server 131(a) received from client 107. In the case of service B, server namespace 133 indicates that the service 116 is provided by server 131(b) on system 101(b), so the message produced by ServiceCall is forwarded to server 131(b), which executes the callee portion of service code 117 as just described. The result message is returned to server 131(a), which in turn returns it to client 107. As is apparent from the foregoing, the message produced by the invocation of ServiceCall in client 107 may be forwarded any number of times.

#### 4.2 Service Code 117: FIG. 2

Each service 116 is defined by service code 117; as indicated above, each client 107 which can request a service 116 has access to a copy of service code 117 for the service 116; similarly, each server 131 which can provide the service 116 has access to a copy. If client 107 and server 131 are in the same system 101, they both may use the same copy of service code 117. In a preferred embodiment, service code 117 used by client 107 is statically linked to the code executed by client 107 which calls the service 116 implemented by service code 117. Service code 117 used by server 131 may be statically linked, or it may also be dynamically linked, as will be described in more detail below. Dynamic linking of service code 117 permits services 116 to be added to or removed from server 131 without interruption of operation of server 131. In other embodiments, service code 117 used by client 107 may also be dynamically linked.

FIG. 2 shows details of service code 117; in a preferred embodiment, it has 6 parts:

- Argument converter 201 is code for encoding the arguments for the service 116 into a form suitable for use by communications system 105 and decoding the arguments as received from communications system 105 into a form suitable for use by client 107 or service 131;
- Result converter 203 is code which does the same for the results of the execution of service 116.
- Init 205 is code which is executed when service code 117 is installed in a server 131;
- Function 207 is code for the function performed by the service 116 implemented in service code 117; it includes two subparts:
  - Caller code 210, which is executed by a client 107 or a server 131 which is calling a server 131; and
  - Callee code 213, which is executed by server 131 which actually provides the service.

Converters 201 and 203 are necessary because the networks used in modern distributed systems typically represent data as a stream of bytes. Consequently, the arguments for the service 116 and the results from the service 116 must be translated between the forms which are required in the systems in which service 116 executes and the forms required by the network. In the preferred embodiment, the code for argument converter 201, result converter 203, and init 205 is provided automatically when service code 117 is generated; the person writing service code 117 need only supply the code in function 207.

Caller and callee code are written in a preferred embodiment as branches of an if statement. The function used in the **if** statement, IsCaller() 209, is a special function used to implement system 102. It returns one value if service code 117 is being executed by a caller and another if service code 117 is being executed by a callee. In the case of execution by a client 107, the function always returns the caller value; in the case of a server 131, the function returns the callee value unless the server is forwarding the service request; in that case, it returns the caller value.

### 4.3 Writing Service Code 117: FIG. 3

FIG. 3 shows how Service Code 117 is written in a preferred embodiment. There are four steps:

- **Specifying Service Interface**

The preferred embodiment employs an extension of a remote procedure language used in Sun computer systems to specify the service interface. The specification defines data structures of input arguments and output results in a C-like syntax. It also declares a service function with the syntax:

**"service"** type-specifier identifier "(" type-specifiers ")";"

where **"service"** is a keyword, the first "type-specifier" specifies the type of the value returned by the service function, the "identifier" specifies the name of the function and the "type-specifiers" in parentheses specify the types of the function's arguments.

- **Generating RPC Stub and a Service Template**

Service code 117 is written using a service compiler, called ServiceGen 303, which takes a service interface as input (i.e., *spec.x* 305, and generates three outputs: XDR routines (i.e., the file *xdr.c* 307), which are argument converter 201 and result converter 203 in a preferred embodiment; a template (i.e., the file *template.c* 309) which a programmer can edit to implement the service function; and an initial function (i.e., the file *init.c* 311) which contains code used when the service code 117 is installed in a server 131.

- **Implementing the Service Function**

application programmers implement the service function by editing (313) template 309 to produce the code for the service function *service.c* 315.

- **Creating a Service Library**

Service code 117 is generated by compiling and linking service function 315, which becomes function 207, xdr routines 307, which become argument converter 201 and result converter 203, and initial function 311, which becomes init code 205. Switches on the compiler permit compilation of service code 117 in forms which permit its incorporation into the server or client program at link time, at system initialization time, and at run time.

It should be emphasized that only the steps of specifying the service interface and implementing the service function are actually carried out by the applications programmer; the XDR routines 307, the template 309, and the initial function are all provided automatically by ServiceGen 305. Consequently, the applications programmer need only understand the service function being implemented in order to write service code 117.

In other embodiments, there may be no template 309. Instead, the applications programmer provides code for service function 315 which includes the service specification 303 to ServiceGen 305, which then generates the XDR routines 307 and the init routine 311 and provides the service specification 303, the XDR routines 307, and the init routine 311 to the compiler.

4.4 **Example of Implementing Service Code 117**

The following example will show how service implementation system 301 may be used to implement a service cp() which operates in server 131 and copies a source file accessible to server 131 to a destination file accessible to the server. The service takes two arguments, a pathname for the source file and another pathname for the destination file. The result returned by the cp() function is an integer, with the value 0 if the execution successes otherwise a system error number (e.g., errno in UNIX).

The service interface for cp() is the following.

```
      struct InArgument
      {
              char   from[128];
              char   to[128];
      };
(a).  service int cp(InArgument);
```

The interface includes a declaration for the input argument, i.e., Struct InArgument, and a declaration for the service function, i.e., the line (a).

ServiceGen then automatically generates generates XDR routines 307, initial function 311, and template 309 for the service. Initial function 311 for the service cp() looks like:

```
bool_t XdrInArgument();  /* XDR Function for input: InArgument */
bool_t XdrInt();         /* XDR Function for output: int */
int    init (pathname)
char   *pathname
caddr_t cp();            /* service function */

int init(pathname)
{
     if (creatnode(pathname, SERVICE, cp, XdrInArgument, XdrInt))
          return (0);
     else
          return (-1);
}
```

This function is invoked by server 131 when the service 116is linked by server 131. It calls a function, creatnode(), which puts the name cp into server namespace 133. As will be explained in more detail later, each name in namespace 133 is represented by a node, and creatnode() creates such nodes. The function takes five arguments: the part of the service pathname following the server name, the type (SERVICE, LINK, or DIRECTORY) of the node, a function pointer to function code 207, a function pointer to argument converter 201, and a function pointer to result converter 203.

Template 309 for cp() looks like this:

```
int* cp(argp, objp)
     struct InArgument *argp;
     char              *objp;
{
     static int  res;

     if (IsCaller())
*    {
*       if (ServiceCall(objp, argp, &res)!=SUCCESS)
*               return (NULL);
*       else
*               return (&res);
*    }

     /* implement the service here*/
     return(&res);
}
```

As previously indicated, service function 207 includes two parts: caller code 210 and callee code 213. Each of the parts is a branch of an **if** statement, and as can be seen above, the value returned by the function IsCaller() indicates which branch is executed. The value returned by that function indicates whether service function 207 is being invoked by a caller or callee and also determines whether caller code 210 or callee code 213 is executed. In the template, the code marked by * in the left margin is caller code 210; callee code 213 remains to be implemented at the point indicated by the comment, /* implement the service here*/. Caller code 210 contains ServiceCall function 210, which actually invokes the service 207 on a server 131.

As can be seen from the above, the template makes implementing a service function 207 as easy as implementing any other function. The fully-implemented service function 207 looks like this (lines beginning with "+" are the callee code 213 which has been added to the template):

```
int* cp(argp, objp)
     struct InArgument *argp;
     char              *objp;
{
     static int     res;
+    int    rfd;
+    int    wfd;
+    int    length;
+    char   buf[1024];

     if (IsCaller())
     {
          if (ServiceCall(objp, argp, &res)!=SUCCESS)
               return (NULL);
          else
               return (&res);
```

```
           }

+          if ((rfd = open(argp->from, O_RDONLY)) < 0 ||
+              (wfd = open(argp->to, O_CREAT | O_WRONLY, 0600)) < 0)
+          {
+               res = errno;
+               return (&res);
+          }
+
+          while ((length = read(rfd, buf, 1024)) > 0))
+               write(wfd, buf, length);
+
+          close(rfd);
+          close(wfd);
+          res = 0;
           return(&res);
      }
```

Service code 117 for service 116 is then created by compiling and linking the service function, XDR functions, and the initial function as previously described.

**4.5 Implementation of Client 107: FIG. 10**

As previously explained, both client 107 and server 131 have a copy of service code 117 and service function portion 207 of service code 117 has caller code which is executed by client 107. Client 107 in a preferred embodiment executes object code for an applications program which uses the service implemented by service code 117. Linked to the object code for the applications program are service code 117, object code for the IsCaller() function 209, object code for the ServiceCall function, and object code for a system-provided remote procedure call. FIG. 10 shows the relationships between the parts of service code 117 and the other components of client 107. IsCaller 1005 is the object code for IsCaller() function 209; the value it returns is kept in state variable ME 1007. In client 107, ME 1007 always indicates a callee. ServiceCall 1016 is the object code for ServiceCall function 211; data used by ServiceCall 1016 includes Args 1003, the actual arguments specified in the invocation of ServiceCall 1016, Results 1004, a buffer which holds the results of the execution of the service 116, and server list 118, which contains server name 1013 for each server accessible to client 107 and server location 1015 for the server. Server location 1015 is a network address for the server in communications system 105. Remote procedure call 1017, finally, is the remote procedure call 1017 provided by the operating system under which client 107 is executing. Remote procedure call 1017 sends call messages 1019 to servers 131 and receives return messages 1021 from those servers. IsCaller function 1005, ServiceCall function 1016, and remote procedure call 1017 together make up caller stub 1023 of client 107. As will be seen in more detail below, servers 131 also have caller stubs 1023.

Operation of client 107 is as follows: A program being executed by client 107 invokes the service using the function name and arguments specified in server interface specification 303; the result of the invocation is the execution of the code in service function 207. Since client 107 is executing service function 207, IsCaller indicates that the caller is executing the service function, and the code in caller portion 210 is executed. That code contains an invocation 211 of ServiceCall 1016. The invocation specifies service pathname 116, which, as previously indicated, includes the system 101 upon which server 131 executes, the name of server 131 and the pathname of service 116 in server 131's namespace, arguments 1003 for the service 116, and buffer 1004 for the results of the execution of the service by the server. For example, if the system name is condor and the server name is dscs and the pathname in dscs's server namespace 133 /bin/cp, the service pathname will be /condor/dscs/bin/cp.

Service call 1016 places the arguments for service 116 in Args 1003, uses the server name in the pathname to find the network address for the server in server list 118, and then invokes remote procedure call 1017. The invocation specifies as arguments the network address, the pathname for the service in the server namespace 133, arguments 1003, buffer 1004 for the result, argument converter 201, and result converter 203. Remote procedure call 1017 uses argument converter 201 to put the arguments for service 116 into the proper form for the communications system, then makes a call message addressed to server 131 which contains the service path name and the encoded arguments, and finally sends the call message 1019 to server 131.

When server 131 is done executing callee code 213, it sends a return message 1021 to RPC 1017 which contains the results. RPC 1017 uses result converter 203 to decode the results, places the decoded results in results buffer 1004, and returns to ServiceCall, which in turn returns to caller portion 210 of service function 207. Execution of caller portion 210 is then completed. Typically, completion of execution of caller portion 210 involves returning the contents of results buffer 1004 to the execution which invoked service function 207.

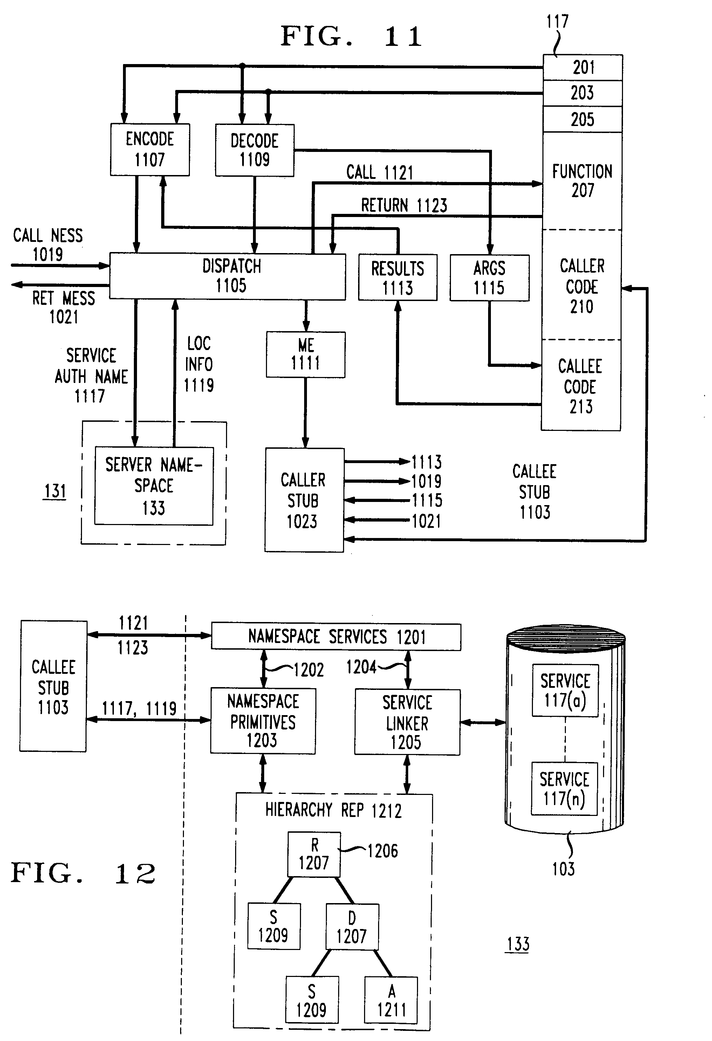

## 4.6 Implementation of Server 131: FIG. 11

Fig. 11 shows details of those parts of the implementation of server 131 which are directly involved in the execution of a service 116. Server 131 has its own copy of service code 117 for the service 116 and additionally includes a caller stub 1023 with the same components as caller stub 1023 in client 107. Caller stub 1023 and the other components of server 131 which are directly involved in the execution of service 116 together make up callee stub 1103. The most important additional component of callee stub 1103 is dispatch 1105, object code for a function which responds to a call message 1019 from a client 107 by executing service function 207 for the service 116 specified in the call message.

Continuing with a more detailed description of the implementation of server 131, the call message 1019 received in dispatch 1105 specifies the service pathname in server namespace 133 of service code 117. dispatch 1105 invokes a function, FindService, in server namespace 133, which takes the service pathname 1117 for the service and returns information 1119 specifying where the service is to be provided. Next, dispatch 1105 invokes decode function 1109, which takes the message and a pointer to argument converter 203 and decodes the arguments in the message and places them in Args 1115. Thereupon, dispatch1105 determines whether information 119 specifies that the service is to be provided by server 131 or another server 131'. In the latter case, the information includes a link pathname for the service which specifies the service pathname for the service 116 in server namespace 133' belonging to server 131'. When the service 116 is to be provided by server 131, dispatch 1105 sets state variable ME 1111 to specify a callee; otherwise dispatch 1105 sets state variable ME 111 to specify a caller. Thereupon, dispatch 1105 invokes service function 207 with the arguments in Args 1115 and a service pathname, as shown by arrow 1121. If the service 116 is to be provided in server 131, the service pathname is the pathname for the service 116 in server 131's server namespace 133; if it is to be provided in server 131', it is the pathname for the service 116 in server 131''s server namespace 133'.

As described in the discussion of client 107, whether caller portion 210 or callee portion 213 of service function 207 is executed depends on the value returned by IsCaller 1005 of caller stub 1023, which in turn depends of the value of ME 1111. Thus, if service location 1119 specifies a location on another server 131', dispatch 1105 has set ME 1111 to indicate a caller, and caller portion 210 is executed with service location 1119 and arguments 1115 as arguments for ServiceCall 1016. The invocation of ServiceCall1016 proceeds exactly as described for client 107, except that the results which ServiceCall 1016 receives from RPC 1017 are placed in results buffer 1113 and that the function which resumes execution on return from caller portion 210 is dispatch 1105, as shown by arrow 1123.

If information 1119 specifies that server 131 is to provide the service 116, dispatch 1105 has set ME 1111 to indicate a callee, IsCaller so indicates, and callee portion 213, which contains the code which performs the actual function for the service, is executed using the contents of Args 113. The result of the execution is placed in Results 1113, and the return is to dispatch 1105. Regardless of whether caller portion 210 or callee portion 213 was executed, dispatch 1105 uses results converter 205 to encode results 113 and sends the encoded results in a return message 1021 to the source of the remote procedure call, which may be a client 107 or another server 131.

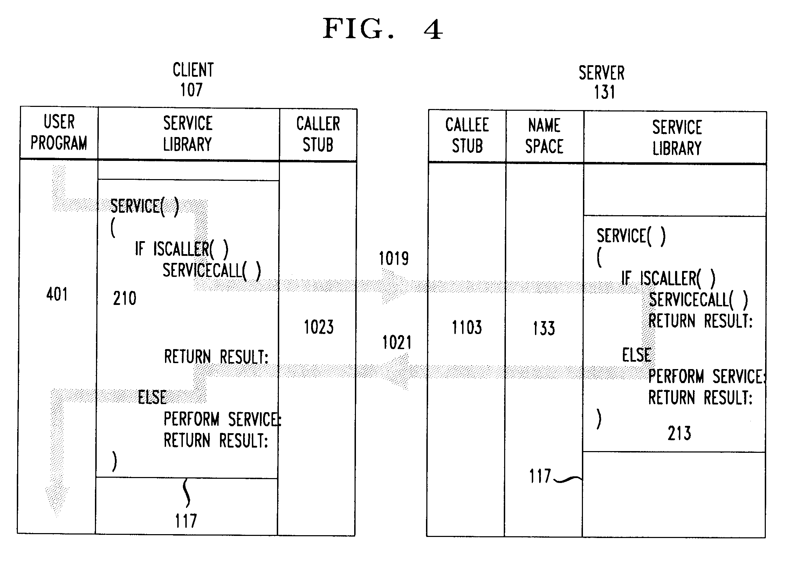

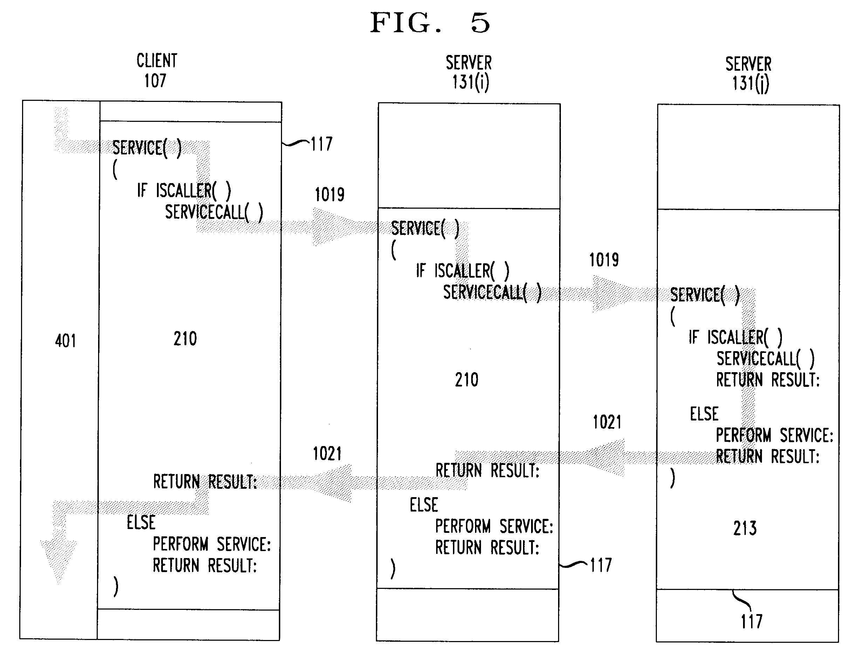

### 4.7 Calling and Forwarding a Service 116: FIGS. 4 and 5

FIGS. 4 and 5 show how client 107 and server 131 cooperate to execute a service 116 for a user program executed by client 107. FIG. 4 shows the case in which server 131 specified in client 107's server list 118 itself executes the service's callee code 213. Client 107 and server 131 have duplicate copies of service code 117; in client 107, IsCaller always returns a value indicating that service code 117 is being executed by a caller. Thus, when user program 401 invokes service function 207 in service code 117, caller portion 210 of service function 207 is executed, and the invocation of the ServiceCall function 211 results in caller stub 1023 producing a call message 1019 to server 131.

The message is received by callee stub 1103. Callee stub 1103 determines from server namespace 133 whether server 131 is to execute service 116. In the case of FIG. 4, server 131 is to execute the service, and consequently, called stub 1103 sets ME variable 1111 to indicate "callee". Then callee stub 1103 invokes service function 207. IsCaller indicates this time that service function 207 is being executed by a callee, and consequently, callee portion 213 is executed. When the execution of callee portion 213 is finished, callee stub 1103 returns return message 1221 to caller stub 1023, which executes any remaining part of caller portion 213. As previously indicated, the remaining portion generally returns the results contained in return message 1221 to user program 401.

In the case of FIG. 5, there are two servers, server 131(i), which is the server listed in client 107's server list 118, and server 131(j), which is listed in server 131(i)'s server namespace 133 as the server upon which callee portion 213 of service 207 is to be executed. Client 107 produces call message 1019 as previously described; however, callee stub 1103 in server 131(i) determines from server namespace 133 that for service 116, server 131(i) is an agent for server 131(j), that is, that service 116 is to be executed by server 131(j). Consequently, callee stub 1103 sets ME variable 1111 to indicate "caller" and when callee stub 1103 executes server 131(i)'s copy of service code 117. IsCaller indicates "caller" and it is caller portion 210 of service code 117 which is executed. Callee stub 1103 includes a caller stub 1023 and a service list 118, and when ServiceCall 211 is executed in caller portion 210, the result is a call message 1019 for service 116 to server 131(j). Since server 131(j)'s server namespace 133 indicates that server 131(j) is to execute service 116, server 131(j) executes callee portion 213 as described above; server 131(j) then returns return message 1023 to server 131, which executes the remainder of caller portion 210. That in turn results in callee stub 1103 of server 131(i) sending a return message 1023 to client 107, which in turn provides the returned results to the execution of user program 401 which invoked service 116. Of course, server 131(j) may also be an agent, in which case the execution of callee portion 213 is forwarded to yet another server 131(k). There is in general no limit to the length of the chain of agents; however, in a preferred embodiment, the call message from client 107 includes a value which limits the number of times the execution can be forwarded, and thus prevents a request for a service 116 from being forwarded around a loop of servers 131.

### 4.8 Implementation of Server Namespace 133: FIG. 12

FIG. 12 presents an overview of the implementation of server namespace 133 for a server 131 in a preferred embodiment. Server namespace 133 maps service pathnames onto location information 1119 for services. There are three possible kinds of location information. If the service 116 is to be provided by the server 131, the location information may either be a pointer to a copy of service code 117 in the memory of system 101 upon which server 131 is running or the system path name of a file containing service code 117 in file system 103 belonging to system 101. If the service 116 is to be provided by another server 131', the location information is the service path name of service 116 in that server 131''s server namespace 133'. Consequently, as shown by the arrow labelled 1117,1119, dispatch 1105 in callee stub 1103 can use server namespace 133 to resolve service path names 1117 into service location information 1119.

The components of server namespace 133 include hierarchy representation 1212, which represents the hierarchy of names making up server namespace 133, namespace primitives 1203, which operate on hierarchy representation 1212, service linker 1205, which performs the mapping between service code 117 in disk drive 103 and the names specified in hierarchy representation 1212, and namespace services 1201, which is a set of services 116 which server 131 provides to its clients 107 so that the clients 107 can manipulate server namespace 133. The services use namespace primitives 1203 to perform the actual manipulations, as shown by arrow 1202.

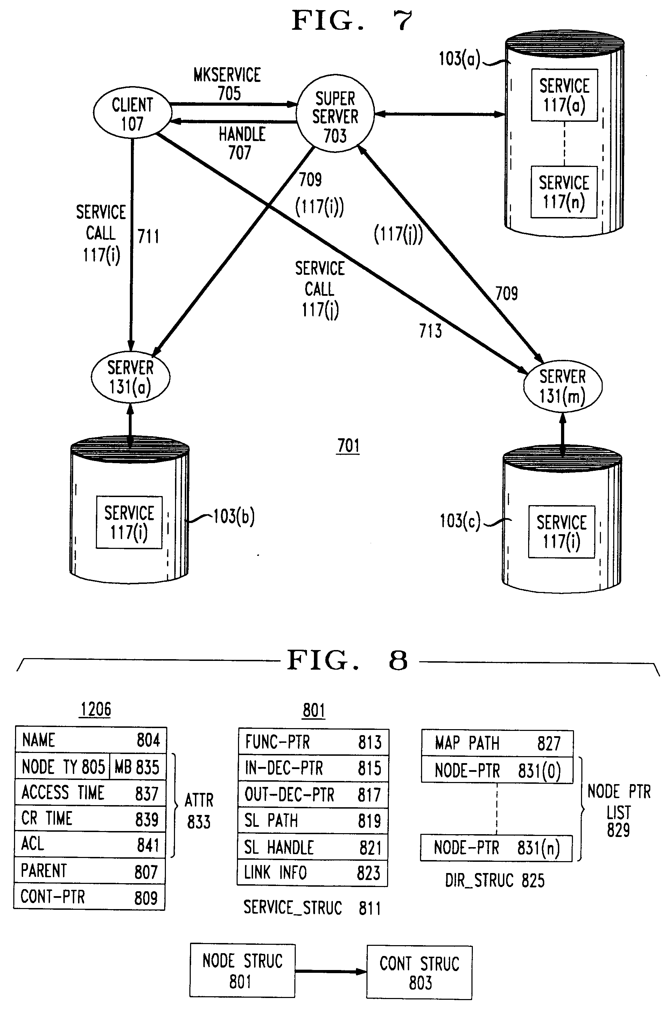

#### 4.8.1 Hierarchy Representation 1212: FIGS. 12 and 8

Continuing in more detail with hierarchy representation 1212, representation 1212 is a tree with three kinds of nodes 1206: directory nodes 1207, which represent directories in server namespace 133, service nodes 1209, which represent services 116 which are executed by this server 131, and agent nodes 1211, which represent services 116 which are executed by other servers 131 for this server 131. FIG. 8 shows how nodes 1206 are implemented: each node has two parts: a node structure 801, which represents the node itself, and context structure 803, which represents either the directory or the service 116 represented by node 1206. FIG. 8 also has a detail of node structure 801; it contains name 804, which is the name in server namespace 133 represented by node 1206, attributes 833, which indicates attributes of the node, parent pointer 807, which points to the parent of node 1206 in hierarchy representation 1212, and cont_ptr 809, which points to context structure 803 for the node.

The attributes include the node 1206's type in field 805, and in the case of service nodes 1209, they also include mapped bit field 835, which indicates whether the service node is mapped to a file containing service code 117, and if the node is not mapped, file attributes for service code 117. The file attributes include the last time service code 117 was accessed by server 131, in field 837, the time the file containing service code 117 was created, in field 839, and an access control list in field 841. The access control list is a list of the users allowed to access the service.

The contents of a context structure 803 for a service are shown at 811. The first three fields are set when service code 117 is loaded into the memory of system 101 upon which server 131 is running. func_ptr 813 is a pointer to function code 207 for the service; in_dec_ptr 815 is a pointer to argument converter 201 and out_dec_ptr is a pointer to result converter 203. SL path 819 is the system path name of service code 117 in file system 103. The system path name is used by service linker 1205 to locate service code 117 in file system 103. SL_handle 821 is the value returned by file system 103 when service linker 1205 opens service code 117. Link_info 823, finally is used when node 1206 represents an agent 1211. In that case, Link_info 823 contains a service path name for service 116 in server 131' which is to provide the service 116.

The contents of a context structure 803 for a directory are shown at 825. The first field, map_path 827, is used to map a directory name in server namespace 133 to a directory name in file system 103. When this has been done, server 131 automatically adds services 116 with service code 117 in the mapped directory to its server namespace 133. The field contains the system path name in file system 103 of the directory which corresponds to the directory in server namespace 133 to which context structure 803 belongs. The remainder of the fields in context structure 827 are pointers to the nodes 1206 which represent the services or directories in the directory represented by dir_struc 825. There is a node_ptr 831 for each service or directory, and the list of pointers makes up node_ptr_list 829.

#### 4.8.2 Details of Namespace Primitives 1203

The primitive operations in server namespace 133 fall into two classes: locating a node 1206 when given the path name for the entity represented by the node and adding and removing nodes 1206 in hierarchy representation 1212.

The primitive for locating a node is namei. nameitakes a pathname in server namespace 133 as as an argument and returns a pointer to node 1206 which represents the pathname. The function begins at the root of hierarchy representation 1212 and works down the pathname and hierarchy representation 1212 a component at a time. If namei either runs out of names in the pathname or runs out of nodes in representation 1212, or finds a service node 1209 or an agent node 1211, it returns the pointer to the current node 1206 and any remainder of the pathname.

The primitive which adds a node is called creatnode. Its arguments include the type of the node and information required to fill in the relevant fields of node structure 801 and context structure 803. The primitive creates a node structure 801, fills in fields 804, 833, and 807, creates the proper type of context structure 803, fills in fields of the context structure as required by the node type, and fills in field 809 of node structure 801. The primitive which removes a node simply unlinks node structure 801 from hierarchical representation 1212, updating node_ptr_list 829 in the parent of the removed node 1206 as required.

#### 4.8.3 Using the Primitives

The primitives are used to execute a service 116 and to perform namespace services 1201. As previously described, executing a service is carried out in server 131 by dispatch1105, a component of callee stub 1103. dispatch receives a message with a service's path in name space 133 and uses the function FindService to find the service. FindService uses namei to move down hierarchical representation 1212 until it reaches a leaf node.

What happens then depends on the node type. If the leaf node is a service node 1206 or a an agent node 1211, FindService simply returns the node to dispatch. If the node is a directory node and has a map path 827, FindService passes the remainder of the pathname to a function called DLService, which used map path 827 to find a directory in file system 103 and then uses the rest of the path name to locate service code 117 beginning at that directory. Once DLService finds service code 117, it executes the service code's init function 205, which in turn executes creatnode to create the necessary nodes in hierarchy representation 1212 for service 116. Thereupon, it returns the service node 1209 for the service 116 to dispatch. In all other cases, FindService returns a value which indicates failure.

If FindService indicates failure, dispatch sends a message to the caller indicating that the service was not found. 1206. Otherwise, dispatch begins providing service 116. First it uses in_dec_ptr 815 in services_truc 811 for the node 1206 to locate argument converter 201 in service code 117 and decode the argument for the service. What dispatch then does depends on the contents of node 1206; if node 1206 is an agent node 1211, dispatch sets me 111 to indicate caller and sets the handle for the service to be called from link info field 823. If node 1206 is a service node 1209, dispatch1105 sets me 111 to indicate callee. In both cases, dispatch 1105 then uses func_ptr 813 to invoke function 207. When the function's mapped bit 835 is set, the invocation is preceded by a check of the access control list of service code 117; otherwise, the check is made on access control list 841 in node structure 801 for the service 116. On return from the invocation, dispatch 1105 uses out_dec_ptr to locate result converter 203 in service code 117 and encode the results of the execution of the service. The encoded result is then returned to the caller.

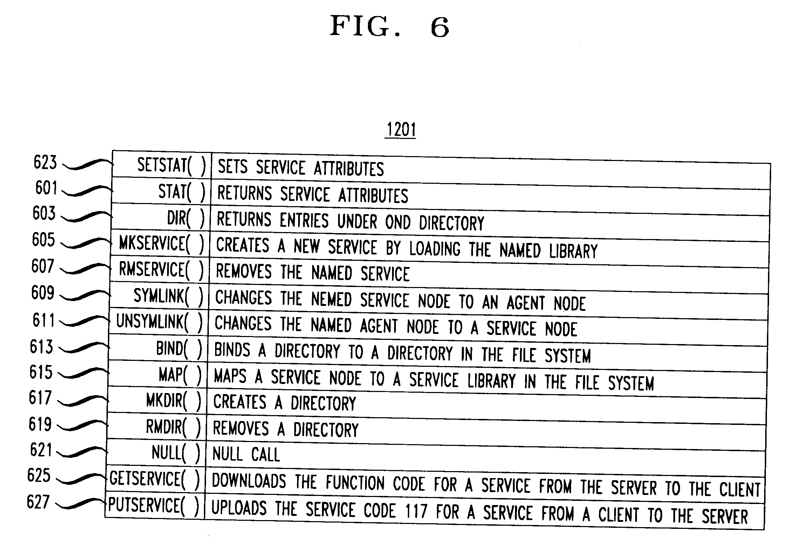

The namespace primitives are also used by namespace services 1201. FIG. 6 is a list of those services in a preferred embodiment. With the exception of null 621, each of the services 602 either reads or alters a node 1206. In a preferred embodiment, directory nodes 1207 are added by mkdir service 671. mkdir 671 takes the pathname in name space 133 of the new directory as an argument. After namei has located the already-existing part of the pathname, creatnode simply makes node structure 801 and dir_struc 825 for the new directory, sets the fields in node structure 801 as required for the new directory, and adds a pointer to the new node 1206 to node_ptr_list 829 in the node 1206 which is the parent of the directory being created. rmdir takes the pathname of the node to be removed as an argument. At the time of the removal, the directory node 1207 may not have any children. The remove primitive simply unlinks the specified node 1207 and updates node_ptr_list 829 in the parent node of the deleted node accordingly.

The mkservice service 605 adds a service node 1209 to hierarchy representation 1212. The arguments for mkservice are the service pathname of the new service in server namespace 133 and the system pathname of the file containing service code 117 in file system 103. mkservice uses namei to locate the directory node 1207 which is the parent of service node 1209 for the service 116 to be added. Once the proper directory node 1207 has been located, mkservice uses the dlopen primitive provided by service linker 1205 to open service code 117 and uses'another primitive, dlsym, provided by service linker 1205, to execute init portion 205 of service code 117 with the arguments of mkservice. Init portion 205 in turn uses creatnode to create the new node and fill in fields 804-809 in node structure 801 and service_struc 811. A service node 1209 is removed by the rmservice 607 service, which employs the removal primitive substantially as set forth above for directories.

The symlink service 609 changes a service node 1209 to an agent node 1211. The arguments are the service pathname of the service 116 in the present server 133's server namespace 133 and the service pathname of the service 116 in the server namespace 133 of the new server 133'. symlink uses the service pathname of the service in the present server with namei to obtain a pointer to the service node 1209 and then changes the type of the service node 1209 to LINK and places the service pathname of the service in the new server 133' in link info field 823 of service_struc 811. The unsymlink service 611 changes an agent node 1211 back into a service node. The service takes as its argument the pathname for the agent node 1211 in server 133. It uses namei to locate the node and then resets the node's type to SERVICE.

The bind and map services 613 and 615 establish relationships between nodes 1206 and parts of the system name space of system 101 upon which server 131 runs. bind 613 takes as its argument a service pathname in server namespace 133. It 613 uses namei and the service pathname to locate the node 1209 for the service. It then sets mapped bit 835 to indicate that the service 116 has been bound to the file containing service code 117. Mapped bit 835 can be reset by setstat, as described below.

The map service 615 maps a directory node 1207 in hierarchy representation 1212 onto a directory in file system 103. The arguments for map are the service pathname for directory node 1207 and the system pathname for the directory in file system 103 which is to be bound to directory node 1207. The service uses namei to locate the directory node 1207 and then writes the system pathname for the directory in file system 103 into map_path field 827.

The stat and dir namespace services 602 return information about a service 116 or a directory. stat 602 returns the attributes of service 116. dir returns a list of the contents of a directory in server namespace 133. Both services take a service pathname as an argument. Both use namei and the service pathname to locate the node 1206 specified by the service pathname, and the information returned by the services is then obtained from the specified node. In the case of stat, the information is always the node's type 805 and the setting of its mapped bit field 835 from node structure 801. If mapped bit field 835 indicates no mapping, the information further includes the contents of access time field 837, create time field 839, and access control list field 841. If mapped bit field 835 indicates mapping, this information is obtained from the file which contains service code 117. setstat623 permits mapped bit field 835 and the contents of fields 837-841 to be set by a client 107. The arguments are the service path name for the node and the values to which the attributes are to be set. The function uses namei to locate the node 1206 and then sets the relevant fields from the values.

getservice 625 and putservice 627 permit service code 117 to be uploaded from a client 107 to a server 131 and downloaded from a server 131 to a client 107. Uploading is done by putservice 627, which takes as its arguments a service path name for the service 116 and a buffer with service code 117. Server 131 performs the function by creating a file in its file system for service code 117 and creating a service node 1206 for the service 116 which specifies the file containing the uploaded service code 117. Downloading is done by getservice 625, which takes two arguments: the service path name for the service 116 and a buffer for service code 117. In server 131, getservice uses namei to locate service node 1209 for the service 116, uses the information in service node 1209 to locate service code 117, and sends service code 117 back to client 107. In client 107, the service code is moved from the buffer to a location in the system name space of client 107 and is then dynamically linked to the code being executed by client 107.

## 4.9 Applications of Servers 131: FIGS. 7 and 9

Servers 131 may be used in a number of ways to solve problems of distributed systems. One such problem is fault tolerance. As shown in system 901 of FIG. 9, A server 131(a) can forward a request for a service to any of a number of servers 131(b..n). Consequently, server 131(a) can respond to a failure by one of the servers 131(b..n) by using symlink 609 to change the agent node 1211 for the service so that the the request for the service is forwarded to a working server 131.

Forwarding requests for services can also be used to balance loads among servers 131(b..n). Server 131(a) need only keep track of how many requests have been forwarded to each of the servers 131(b..n) and change the agent node 1211 as required. Such load balancing may of course also be responsive to other information such as the state of the systems in which servers 131(b..n) operate or the time of day. In some embodiments, link info 823 can be a pointer to a scheduling function which determines which of the servers 131(b..n) the service request is to be forwarded to.

The fact that a service 116 is accessed by means of server namespace 133 also makes dynamic updating of services easy. All that need be done when a new copy of service code 117 for a service 116 becomes available is use rmservice 605 to remove the old service 116 from server namespace 133 and then use either mkservice or putservice 627 to again place service 116 in server namespace 133. mkservice is used when client 107 and server 131 share a system name space and putservice is used when client 107 and server 131 belong to different system name spaces. Access by a client 107 to a service node 1209 which is being changed can be avoided by the use of one many locking mechanisms.

One way of taking full advantage of the possibilities opened up by servers 131 and services 116 is to include a *super server* in the distributed system FIG. 7 shows a distributed system 701 with a super server 703. Like an ordinary server 131, super server 703 has a file system 103(a) with service code 117(a..n) for a number of services. Super server 703 of course also has a server namespace 133 with nodes 1206 for the services. The difference between super server 703 and a server 131 is that super server 703 distributes services 116 as well as executing them.

One way in which such a super server 703 can be used is to distribute services 116 to clients 107. To receive a service 116, the client simply uses getservice 625 to get its copy of service code 117 for the service. Another way in which such a super server can be used is to distribute services 116 to other servers 131. When super server 703 is being used this way, it responds to a request by client 107 to execute a service 116 (j) whose code is included in code 117(a..n) by downloading code 117(j) for the service 116 to a server 131(i) of servers 131 (0..m) (arrow 709) and setting server namespace 133 in super server 703 so that requests for service 116(j) are forwarded to server 131(i). The downloading is of course done using putservice 627.

In another embodiment, super server 703 responds to a request for client 107 for mkservice 605 for a service 116(i) by downloading service code 117(i) for service 116(i) to a server 131(k) in servers 131(0..m) and returning a handle 707 for service 116(i) in server 131(k) to client 107. The handle is of course the name of server 131(k) and the pathname of service 116(i) in server 131(k)'s name space. Client 107 can then use handle 707 to directly request server 131(k) to execute service 116(i). Super server 703's choice of a server 131(k) can of course be made from the point of view of load balancing. Similarly, if server 131(k) fails, client 107 need only repeat the mkservice request to get a new server 131.

One area in which clients 107, servers 131, and services 116 can be used to particular advantage is the telephone switching system. The modern telephone switching system includes a large distributed computing system. The components of the switching system often function as clients and servers for each other. For example, when a call using an 800 number is made, the switching system must get the actual telephone number which currently corresponds to the 800 number from a data base. The switch which receives the 800 number is a client of the data base, which is a server for the 800 number. A number of properties of clients 107, servers 131, and services 116 are particularly useful in the telephone switching system. There is first the fact that a service 116 may be added to or removed from a server 131's name space without interrupting operation of server 131; Then there is the fact that the system provides a number of techniques for load balancing among servers; further, the closeness of the relationship between a service 116 and the file system containing service code 117 may be varied; finally, services 116 may be easily propagated from server 131 to server 131 or between a server 131 and a client 107.

One example of how clients 107, servers 131, and services 116 might be used in a telephone system is the following: client 107 might be a programmable device such as an answering machine; server 131 might contain a service 116 which defined an interaction between a switch and the answering machine; for instance, the service 116 might permit the answering machine to request the number of the party whose call is being answered by the answering machine from the switch. The owner of the answering machine could call an 800 number and specify that the service be provided to the answering machine at a given telephone number. The telephone system could respond to the call by causing server 131 to download the service 116 to the answering machine, which would then be able to perform the interaction defined by the service.

## 5 Conclusion

The foregoing Detailed Description has disclosed to those of ordinary skill in the art how to make and use a client-server system which embodies the principles of the inventions claimed herein. While the Detailed Description discloses the best mode of implementing those principles presently known to the inventor, other implementations of the principles are possible. For instance, in other implementations, communications between client and server may employ mechanisms other than the remote procedure call. Similarly, in other implementations, the server namespace may be flat instead of hierarchical. In other implementations, the service code may not include the argument and result converters or the initialization code. Further, there may be applications where services are dynamically linked to clients or statically linked to servers.

## Claims

1. Apparatus for dividing execution of a program (117) between a caller process and a callee process running in a computer system, the apparatus being characterized by:

   means (1005) for making a determination whether a process (107) executing the program is a caller process or a callee process; and

   in the program,

   a caller portion (210)

   a callee portion (213), and

   a selecting portion (209) for selecting either the caller portion or the callee portion for execution by the process according to the determination.

2. The apparatus set forth in claim 1 further characterized by:

   another process (131(a));

   means responsive to execution of the caller portion by the process (107) for sending a message (1019) requesting that the other process execute the program;

   means (1105) in the other process for receiving the message, making the determination in response thereto, and commencing execution of the selecting portion of the program,

   whereby the other process is able to execute the program as either a caller process or a callee process.

3. The apparatus set forth in claim 2 further characterized in that:

   the other process has access to namespace (133) means for relating a first name identifying the program to a location of a copy of the program; and

   the program further includes an initialization portion (205) which is executed by the other process in order to install the program in the namespace.

4. The apparatus set forth in claim 2 further characterized by:
a further process (131(b)), the further process having message receiving means like those in the other process;
and wherein
the other process has means (1023) responsive to the caller portion for sending a message (1019) to the further process requesting that the further process execute the program; and
the means for receiving the message determines whether the callee portion is to be executed by the other process or the further process and causes the determination to indicate a callee process in the first case and a caller process in the second case.

5. The apparatus set forth in claim 4 further characterized by:
namespace means (133) accessible to the other process for relating a first name identifying the program either to a location of a copy of the program or to a second name identifying the further process; and
the means for receiving the message determines whether the called portion is to be executed by the other process or the further process in response to the namespace means.

6. The apparatus set forth in claim 2 further characterized in that:
the apparatus is implemented in a distributed computing system including a plurality of processing nodes (101);
the process and the other process execute on different ones of the nodes; and
the means for sending a message sends the message from the node upon which the process is executing to the node upon which the other process is executing.

7. The apparatus set forth in any of claims 2, 4, or 5 further characterized in that:
the means responsive to execution of the caller portion includes means (1023) for receiving a return message from the other process with results of execution of the program; and
the means for receiving the message includes means (1016) for sending the return message with the results to the process.

8. The apparatus set forth in claim 7 further characterized in that:
the means for sending a message, the means for receiving a message, the means for sending a result message, and the means for receiving a return message are provided by remote procedure call means (1017).

9. The apparatus set forth in claim 7 further characterized in that:
the message and the return message employ a first representation of the data which is different from a second representation of the data employed in the computer system;
the message includes an argument value;
the return message returns a result value;
the program further includes
an argument converter portion (201) and
a result converter portion (203);
the means for sending a message and the means for receiving a message use the argument converter portion to convert argument values between the first representation and the second representation; and
the means for sending a return message and the means for receiving the return message use the result converter portion to convert result values between the first representation and the second representation.

10. A client-server system of the type wherein a server process (131) executing in a computer system provides a service for a client process (107), the client-server system being characterized by:
server name space means (133) employed by the server process to relate a name for the service to means (117) for providing the service, the name being part of a server namespace distinct from any system namespace provided to the server process by the computer system,
service calling means (1016) employed by the client process to send a message to the server which includes the name for the service; and

service dispatching means (1105) employed by the server process for responding to the name for the service in the message by employing the server name space means to locate the means for providing the service and thereupon to employ the means for providing the service to provide the service to the client.

**11.** The client-server system set forth in claim 10 further characterized by:
one or more namespace manipulation services (1201) which the server process provides to the client process and which the client process employs to manipulate the server namespace.

**12.** The client-server system set forth in claim 11 further characterized by:
a make service service (605) of the namespace manipulation services which relates a new name in the server namespace to means for providing a new service.

FIG. 1


\
109
A
116(1)
B
116(2)
C
116(3)
SERVER NAMESPACE
133
101(c)
103(c)
SERVICE
117(2)
118(d)
SERVER
LIST
101(a)
CLIENT
107
105
SERVER
131(a)
103(a)
SERVICE
117(1)
SERVICE
117(3)
131(a)
118(a)
SERVER
LIST
105
105
101(d)
SERVER
131(b)
103(b)
SERVICE
117(2)
118(b)
SERVER
LIST
101(b)
SERVER
131(c)
103(c)
SERVICE
117(3)
118(c)
SERVER
LIST
102

FIG. 2

ARGUMENT CONVERTER 201
RESULT CONVERTER 203
INIT 205
IF (IS CALLER) 209
CALLER CODE 210
SERVICE CALL (PATH-PTR, ARG-PTR, RES) 211
CALLER CODE 213
FUNCTION 207
117

FIG. 3

303
SPEC.X
SERVICE GEN
305
307
XDR.C
TEMPLATE.C
INIT.C
311
309
EDITING
301
315
SERVICE.C
317
COMPILING
107
SERVICE.SO
117
131
CLIENT
SERVICE.A
SERVER
*.O

FIG. 4

CLIENT 107

USER PROGRAM

401

SERVICE LIBRARY

```
SERVICE( )
(
  IF ISCALLER( )
     SERVICECALL( )
210

     RETURN RESULT:
  ELSE
     PERFORM SERVICE:
     RETURN RESULT:
)
```

117

CALLER STUB

1023

1019

1021

SERVER 131

CALLEE STUB

1103

NAME SPACE

133

117

SERVICE LIBRARY

```
SERVICE( )
(
  IF ISCALLER( )
     SERVICECALL( )
     RETURN RESULT:
  ELSE
     PERFORM SERVICE:
     RETURN RESULT:
)
```

213

CLIENT
107
SERVICE( )
(
IF ISCALLER( )
SERVICECALL( )
RETURN RESULT:
ELSE
PERFORM SERVICE:
RETURN RESULT:
)
210
401
117
1019
1021
SERVER
131(i)
SERVICE( )
(
IF ISCALLER( )
SERVICECALL( )
RETURN RESULT:
ELSE
PERFORM SERVICE:
RETURN RESULT:
)
210
117
1019
1021
SERVER
131(j)
SERVICE( )
(
IF ISCALLER( )
SERVICECALL( )
RETURN RESULT:
ELSE
PERFORM SERVICE:
RETURN RESULT:
)
213
117

FIG. 5

FIG. 6

1201

| Ref. | Call | Description |
| --- | --- | --- |
| 623 | SETSTAT( ) | SETS SERVICE ATTRIBUTES |
| 601 | STAT( ) | RETURNS SERVICE ATTRIBUTES |
| 603 | DIR( ) | RETURNS ENTRIES UNDER OND DIRECTORY |
| 605 | MKSERVICE( ) | CREATES A NEW SERVICE BY LOADING THE NAMED LIBRARY |
| 607 | RMSERVICE( ) | REMOVES THE NAMED SERVICE |
| 609 | SYMLINK( ) | CHANGES THE NEMED SERVICE NODE TO AN AGENT NODE |
| 611 | UNSYMLINK( ) | CHANGES THE NAMED AGENT NODE TO A SERVICE NODE |
| 613 | BIND( ) | BINDS A DIRECTORY TO A DIRECTORY IN THE FILE SYSTEM |
| 615 | MAP( ) | MAPS A SERVICE NODE TO A SERVICE LIBRARY IN THE FILE SYSTEM |
| 617 | MKDIR( ) | CREATES A DIRECTORY |
| 619 | RMDIR( ) | REMOVES A DIRECTORY |
| 621 | NULL( ) | NULL CALL |
| 625 | GETSERVICE( ) | DOWNLOADS THE FUNCTION CODE FOR A SERVICE FROM THE SERVER TO THE CLIENT |
| 627 | PUTSERVICE( ) | UPLOADS THE SERVICE CODE 117 FOR A SERVICE FROM A CLIENT TO THE SERVER |

FIG. 7

MKSERVICE
705
CLIENT
107
SUPER
SERVER
703
HANDLE
707
103(a)
SERVICE
117(a)
SERVICE
117(n)
709
(117(i))
(117(j))
SERVICE
CALL
117(i)
711
SERVICE
CALL
117(j)
709
713
SERVER
131(a)
SERVER
131(m)
701
SERVICE
117(i)
103(b)
103(c)
SERVICE
117(i)

FIG. 8

1206
NAME 804
NODE TY 805
MB 835
ACCESS TIME 837
CR TIME 839
ACL 841
PARENT 807
CONT-PTR 809
ATTR
833
801
FUNC-PTR 813
IN-DEC-PTR 815
OUT-DEC-PTR 817
SL PATH 819
SL HANDLE 821
LINK INFO 823
SERVICE_STRUC 811
MAP PATH 827
NODE-PTR 831(0)
NODE-PTR 831(n)
NODE PTR
LIST
829
DIR_STRUC 825
NODE STRUC
801
CONT STRUC
803

FIG. 9

903(a)
CLIENT
107
SERVER
131(a)
SERVICE
117(i)
901
SERVICE
117(i)
SERVER
131(b)
SERVER
131(m)
SERVICE
117(i)
903(b)
903(c)

FIG. 10

ARG CONVERTER
201
RES CONVERTER
203
INIT 205
FUNCTION 207
IF (IS CALLER)
209
CALLER CODE
210
SERVICE CALL
211
CALLEE CODE
213
117
107
ME 1007
IS CALLER
1005
ARGS
1003
RESULTS
1004
SERVICE
CALL
1016
SERVER NAME
1013
SERVER LOC
1015
SERVER LIST 118
CALLER STUB
1023
RPC
1017
CALL
MESS
1019
RETURN
MESS
1021

FIG. 11

117
201
203
205
ENCODE
1107
DECODE
1109
FUNCTION
207
CALL 1121
RETURN 1123
CALL MESS
1019
RET MESS
1021
DISPATCH
1105
RESULTS
1113
ARGS
1115
CALLER
CODE
210
SERVICE
AUTH NAME
1117
LOC
INFO
1119
ME
1111
CALLEE
CODE
213
SERVER NAME-
SPACE
133
131
CALLER
STUB
1023
1113
1019
1115
1021
CALLEE
STUB
1103

CALLEE
STUB
1103
1121
1123
1117, 1119
NAMESPACE SERVICES 1201
1202
1204
NAMESPACE
PRIMITIVES
1203
SERVICE
LINKER
1205
SERVICE
117(a)
SERVICE
117(n)
103
HIERARCHY REP 1212
R
1207
1206
S
1209
D
1207
S
1209
A
1211
133

FIG. 12